# EUROPÄISCHE PATENTANMELDUNG

(11) **EP 0 693 407 A1**
(43) Veröffentlichungstag der Anmeldung: **24.01.1996**
(21) Anmeldenummer: 95109522.3
(22) Anmeldetag: 20.06.1995
(51) Int. Cl.: B60T 11/32, B60T 17/18

(54) **Mehrkreis-Schutzventil für Druckluft-Bremsanlagen von Nutzfahrzeugen**

(30) Priorität: 22.07.1994 DE 4426112
(71) Anmelder: ROBERT BOSCH GMBH, D-70442 Stuttgart (DE)
(72) Erfinder: Siebold, Manfred, D-71034 Böblingen (DE); Okrent, Elmar, Dipl.-Ing. (FH), D-71686 Remseck (DE)

(57) **Zusammenfassung**

Ein Mehrkreis-Schutzventil (10) enthält in einem Gehäuse (11) wenigstens ein Überströmventil (12), dessen federbelastetes Schließglied (16) die Verbindung der an eine Druckluftversorgung angeschlossenen Primärseite (14.1) des Überströmventils (12) mit der mit einem Verbraucherkreis verbundenen Sekundärseite (14.2) überwacht. Außerdem ist eine die Primärseite (14.1) mit der Sekundärseite (14.2) verbindende Nebenschlußleitung (Pfeilzug 24) vorgesehen. Diese ist wenigstens teilweise von einem beim Urformen des Gehäuses (11) in dessen Werkstoff eingebetteten Bauteil (27) mit einer Durchgangsbohrung (26) gebildet.

Das Mehrkreis-Schutzventil (10) ist in Druckluft-Bremsanlagen von Nutzfahrzeugen verwendbar.

## Beschreibung

### Stand der Technik

Die Erfindung geht aus von einem Mehrkreis-Schutzventil nach der Gattung des Anspruchs 1.

Es ist schon ein solches Mehrkreis-Schutzventil mit einem Gehäuse bekannt, in dem vier Überströmventile aufgenommen sind (DE 34 34 884 A1). Im Schutzventil wird die zugeführte Druckluft mit Hilfe der Überströmventile auf vier Verbraucherkreise verteilt, wobei bestimmte Verbraucherkreise bevorrechtigt zu befüllen sind. Dies wird durch die Nebenschlußleitung erreicht, welche Druckluft zur sogenannten sekundärseitigen Beeinflussung des betreffenden Überströmventils gedrosselt auf dessen Sekundärseite gelangen läßt. Außerdem wird durch die Nebenschlußleitung sichergestellt, daß bei Ausfall eines bevorrechtigten Verbraucherkreises die übrigen Kreise mit Druckluft versorgt werden.

Bei dem bekannten Mehrkreis-Schutzventil ist die Nebenschlußleitung durch eine drosselnde Bohrung im Schließglied des betreffenden Überströmventils ausgebildet, was zwar die Einzelteilfertigung erleichtert, jedoch bei der Montage von Schutzventilen mit unterschiedlicher Ausstattung der Schließglieder die Gefahr einer Vertauschung nicht ausschließt.

### Vorteile der Erfindung

Das erfindungsgemäße Mehrkreis-Schutzventil mit dem kennzeichnenden Merkmal des Anspruchs 1 hat demgegenüber den Vorteil, daß die Montagesicherheit erhöht wird, da die Voraussetzung für eine bevorrechtigte Befüllung bestimmter Verbraucherkreise in das Gehäuse belegt ist, was sehr einfach kontrollierbar ist und die Montage von im übrigen baugleichen Überströmventilen erlaubt. Darüber hinaus ist es mit dem für das Urformen des Gehäuses erforderlichen Formwerkzeug durch Nichteinlegen des Bauteils in die Form auf einfache Weise möglich, auch Gehäuse für Mehrkreis-Schutzventile herzustellen, welche keine Nebenschlußleitung besitzen. Der sonst vom Bauteil eingenommene Raum wird dann vom Gehäusewerkstoff beim Urformen aufgefüllt.

Durch die in den Unteransprüchen aufgeführten Maßnahmen sind vorteilhafte Weiterbildungen und Verbesserungen des im Anspruch 1 angegebenen Mehrkreis-Schutzventils möglich.

### Zeichnung

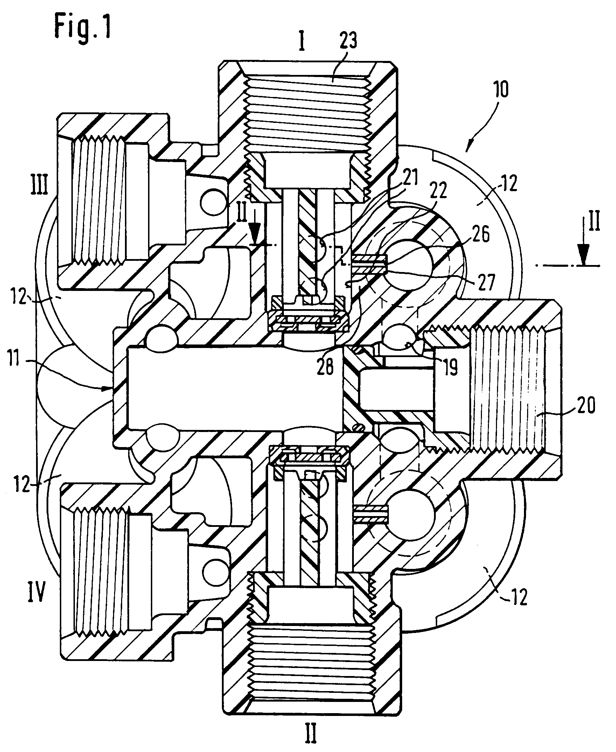

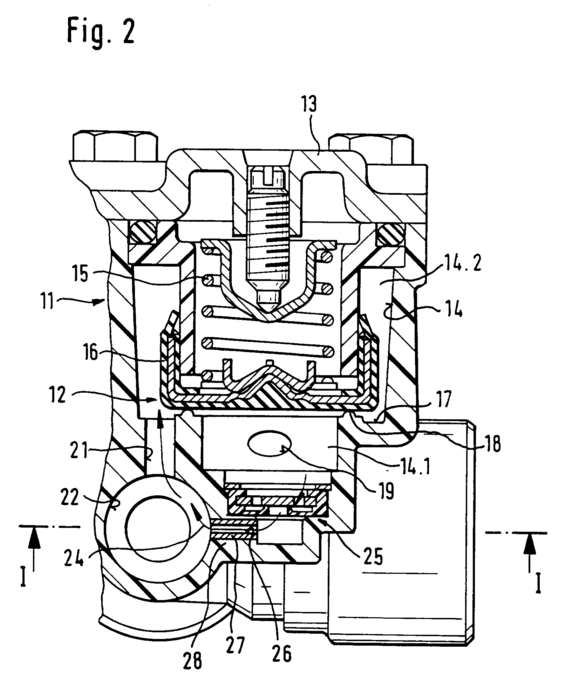

Ein Ausführungsbeispiel der Erfindung ist in der Zeichnung anhand eines Gehäuses für ein Mehrkreis-Schutzventil dargestellt und in der nachfolgenden Beschreibung näher erläutert. Es zeigen Figur 1 einen Schnitt entlang der Linie I-I in Figur 2 durch das Gehäuse und Figur 2 einen Teilschnitt des Gehäuses entlang dem Linienzug II-II in Figur 1.

### Beschreibung des Ausführungsbeispiels

Das in der Zeichnung dargestellte Mehrkreis-Schutzventil 10 dient der Drucksicherung von vier Verbraucherkreisen I bis IV in Druckluft-Bremsanlagen von Nutzfahrzeugen. Hierzu sind in einem Gehäuse 11 des Mehrkreis-Schutzventils 10 vier Überströmventile 12 aufgenommen, von denen jeweils eines einem Verbraucherkreis zugeordnet ist. Ein derartiges Überströmventil 12 ist in Figur 2 der Zeichnung im Schnitt dargestellt. Ein solches Überströmventil 12 ist in einer durch einen Deckel 13 abgeschlossenen, topfförmigen Ausnehmung 14 des Gehäuses 11 aufgenommen. Das Überströmventil 12 hat ein manschettenförmiges, von einer Ventilfeder 15 belastetes Schließglied 16, welches im Bereich einer Bohrungsstufe 17 der Ausnehmung 14 an einem Ventilsitz 18 angreift. Das Schließglied 16 trennt die deckelabgewandte Primärseite von der deckelseitigen Sekundärseite des Überströmventils 12. Der primärseitige Teil 14.1 der Ausnehmung 14 steht durch eine Bohrung 19 mit einem Stutzen 20 des Gehäuses 11 in Verbindung, welcher an eine nicht dargestellte Druckluftversorgung der Bremsanlage angeschlossen ist. Vom sekundärseitigen Teil 14.2 der Ausnehmung 14 führen Verbindungsbohrungen 21 zu einem Kanal 22 des Gehäuses, welcher in einen dem Verbraucherkreis I zugeordneten Anschlußstutzen 23 mündet. Außerdem ist eine in Figur 2 durch einen Pfeilzug verdeutlichte Nebenschlußleitung 24 vorgesehen, welche unter Umgehung des Überströmventils 12 dessen Primärseite mit der Sekundärseite verbindet. Im Zuge der Nebenschlußleitung 24 liegen ein Rückschlagventil 25 mit Durchlaßrichtung von der Primärseite zur Sekundärseite sowie eine Drossel. Diese ist von einer Durchgangsbohrung 26 eines rohrförmigen Bauteils 27 gebildet, das in einer Wand 28 des Gehäuses 11 zwischen der Ausnehmung 14 und dem Kanal 22 eingebettet ist. In gleicher Weise ist das in der Zeichnung nicht sichtbare Überströmventil des Verbraucherkreises II ausgebildet.

Das Gehäuse 11 des Mehrkreis-Schutzventils 10 besteht aus einem glasfaserverstärkten Kunststoff. Es wird in einem nicht dargestellten Formwerkzeug durch Spritzgießen (Urformen) hergestellt. Zum Erzeugen der Hohlräume im Gehäuse 11 besitzt das Werkzeug entsprechend ausgebildete Kernschieber. Wie man aus der Zeichnung erkennt, sind für die Ausbildung der Ausnehmung 14 ein deckelseitig herangeführter Kernschieber und für die Formgebung des Kanals 22 ein von der Seite des Anschlußstutzens 23 her in das Formwerkzeug eingreifender Kernschieber erforderlich. Die Achsen der Ausnehmung 14 sowie des Kanals 22 verlaufen im rechten Winkel mit Abstand zueinander. Da am fertigen Gehäuse 11 die Wand 28 den primärseitigen Teil 14.1 der Ausnehmung 14 vom Kanal 22 trennt, nehmen die Kernschieber einen Abstand voneinander ein. Das in die Wand 28 einzubettende, rohrförmige Bauteil 27 besteht aus Metall und ist derart zwischen den Kernschiebern aufgenommen, daß sich die Achse seiner Durchgangsbohrung 26 im rechten Winkel zu den Längsachsen der beiden Kernschieber erstreckt. Hierdurch sind auf einfache Weise die beiden Stirnseiten des rohrförmigen Bauteils 27 dicht an die Kernschieber anzuschließen, so daß beim folgenden Vorgang des Urformens kein Werkstoff in die Durchgangsbohrung 26 gelangt. Die nach dem Erstarren des Werkstoffs aus dem Gehäuse 11 herausgezogenen Kernschieber geben die Durchgangsbohrung 26 des in die Wand 28 eingebetteten Bauteils 27 frei.

Bei einem Überströmventil ohne Nebenschlußleitung wird kein rohrförmiges Bauteil zwischen die Kernschieber eingefügt. Der in das Formwerkzeug eingespritzte Werkstoff bildet dann eine die Ausnehmung 14 vom Kanal 22 völlig trennende Wand 28 aus.

## Patentansprüche

1. Durch Urformen hergestelltes Gehäuse (11) für ein Mehrkreis-Schutzventil (10) für Druckluft-Bremsanlagen von Nutzfahrzeugen, mit wenigstens einem Überströmventil (12), dessen federbelastetes Schließglied (16) die Verbindung der an eine Druckluftversorgung angeschlossenen Primärseite des Überströmventils (12) mit der mit einem Verbraucherkreis (I) verbundenen Sekundärseite überwacht, und mit einer die Primärseite mit der Sekundärseite verbindenden Nebenschlußleitung (24),
dadurch gekennzeichnet,
daß die Nebenschlußleitung (24) wenigstens teilweise von einem in den Werkstoff des Gehäuses (11) eingebetteten Bauteil (27) mit einer Durchgangsbohrung (26) gebildet ist.

2. Mehrkreis-Schutzventil nach Anspruch 1, dadurch gekennzeichnet,
daß das Gehäuse (11) eine gestufte, topfförmige Ausnehmung (14) hat, in welcher das an einer Bohrungsstufe (17) mit Ventilsitz (18) angreifende Schließglied (16) des Überströmventils (12) aufgenommen ist,
daß im Gehäuse (11) ein mit Abstand zur Ausnehmung (14) verlaufender Kanal (22) angeordnet ist, der in Verbindung mit der Sekundärseite des Überströmventils (12) steht,
und daß das Bauteil (27) in einer Wand (28) des Gehäuses (11) eingebettet ist, welche den auf der Primärseite des Überströmventils (12) liegenden Teil (14.1) der Ausnehmung (14) von dem Kanal (22) trennt.

3. Mehrkreis-Schutzventil nach Anspruch 2, dadurch gekennzeichnet, daß die Achsen der Ausnehmung (14) und des Kanals (22) rechtwinklig zueinander verlaufen und daß die Achse der Durchgangsbohrung (26) des Bauteils (27) sich zu diesen Achsen im rechten Winkel erstreckt.

4. Mehrkreis-Schutzventil nach Anspruch 1, dadurch gekennzeichnet, daß das Gehäuse (11) aus Kunststoff und das Bauteil (27) aus Metall bestehen.

5. Mehrkreis-Schutzventil nach Anspruch 1, dadurch gekennzeichnet, daß das Bauteil (27) rohrförmig ausgebildet ist.

6. Mehrkreis-Schutzventil nach Anspruch 1, dadurch gekennzeichnet, daß das Bauteil (27) als Drossel ausgebildet ist.
